(19) Europäisches Patentamt
European Patent Office
Office européen des brevets

(11) EP 4 632 777 A1

(12) DEMANDE DE BREVET EUROPEEN

(43) Date de publication:
15.10.2025 Bulletin 2025/42

(21) Numéro de dépôt: 25169329.7

(22) Date de dépôt: 09.04.2025

(51) Classification Internationale des Brevets (IPC):
**H01H 9/54** (2006.01)

(52) Classification Coopérative des Brevets (CPC):
**H01H 9/542;** H01H 33/596; H01H 2009/543;
H01H 2009/544

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: 10.04.2024 FR 2403699

(71) Demandeur: SCHNEIDER ELECTRIC
INDUSTRIES SAS
92500 Rueil-Malmaison (FR)

(72) Inventeurs:
• HERAUD, Sébastien
38100 Grenoble (FR)
• ORBAN, Rémy
38410 Saint-Martin-d'Uriage (FR)
• REYMOND, Bruno
38430 Moirans (FR)
• CHAUVE, Vincent
38690 Colombe (FR)

(74) Mandataire: Lavoix
62, rue de Bonnel
69448 Lyon Cedex 03 (FR)

(54) **DISPOSITIF DE PROTECTION ÉLECTRIQUE, INSTALLATION ÉLECTRIQUE ET PROCÉDÉ DE COMMANDE ASSOCIÉS**

(57) La présente invention concerne un dispositif de protection électrique, qui comprend :
- un interrupteur mécanique ;
- une cellule d'interruption (18) comprenant une pluralité de modules de commutation (32, 42) comprenant au moins un élément semi-conducteur (34, 35, 44, 45) et un élément de limitation de tension (39, 49),
chaque module de commutation ayant une tension de limitation ($U_{lim1}$, $U_{lim2}$), chaque module de commutation étant configuré pour basculer entre une configuration passante et une configuration bloquée; et
- une unité de contrôle comprenant un module de commande de cellule (66), configuré pour commander successivement chaque module de commutation dans la configuration bloquée,
une entrée de l'interrupteur mécanique et une entrée (18a) de la cellule d'interruption, et une sortie de l'interrupteur mécanique et une sortie (18b) de la cellule d'interruption sont connectées l'une à l'autre par une liaison électrique (19a, 19b) non interruptible.

FIG.2

## Description

La présente invention concerne un dispositif de protection électrique, une installation électrique et un procédé de commande associés.

Il est connu d'utiliser des dispositifs de protection électrique comprenant un interrupteur mécanique, et une cellule d'interruption comprenant au moins un module de commutation comprenant élement semi-conducteur connecté en parallèle avec un élément de limitation de tension. Ces dispositifs de protection sont également appelés disjoncteurs hybrides.

US11715945B2 décrit un dispositif de protection électrique configuré pour détecter un arc électrique et pour interrompre un courant en réponse à la détection d'un arc électrique.

US2022122801A1 décrit un disjoncteur hybride pour un courant continu haute tension, comprenant un disjoncteur prinicipal avec plusieurs modules de commutation connectés en série. Lorsqu'un défaut de type court-circuit est détecté et que le courant électrique doit être interrompu, les modules de commutation sont ouverts successivement, permettant d'augmenter une tension aux bornes du disjoncteur principal de manière progressive et d'éviter une détérioration des composants du disjoncteur prinicpal.

Cependant, ce disjoncteur hybride connu comprend un interrupteur auxiliaire, connecté en série de l'interrupteur mécanique, un ensemble comprenant l'interrupteur auxiliaire et l'interrupteur mécanique étant connecté en parallèle du disjoncteur principal. L'interrupteur auxiliaire génère des pertes électriques importantes, par exemple des pertes causées par dissipation thermique, augmente le nombre de composants nécessaires à la réalisation du disjoncteur hybride.

Le but de l'invention est alors de proposer un dispositif de protection permettant de réduire les pertes électriques et de limiter le nombre de composants.

A cet effet, l'invention a pour objet un dispositif de protection électrique, configuré pour être connecté entre une source et une charge, le dispositif comprenant :

- un interrupteur mécanique, configuré pour basculer entre une configuration fermée, dans laquelle l'interrupteur mécanique conduit un courant circulant entre la source et la charge, et une configuration ouverte, dans laquelle l'interrupteur mécanique ne conduit pas le courant ;
- une cellule d'interruption, connectée en parallèle de l'interrupteur mécanique, la cellule d'interruption comprenant une pluralité de modules de commutation, connectés les uns aux autres, chaque module de commutation comprenant :

  ◦ au moins un élément semi-conducteur ; et
  ◦ un élément de limitation de tension, connecté en parallèle du ou de chaque élément semi-conducteur,

chaque module de commutation ayant une tension de limitation, chaque module de commutation étant configuré pour basculer entre une configuration passante, dans laquelle le courant circule dans le ou dans l'un des éléments semi-conducteurs du module de commutation, et une configuration bloquée, dans laquelle si le courant circule dans le module de commutation, il circule dans l'élément de limitation de tension ;

- un capteur de courant configuré pour mesurer une intensité du courant ;
- une unité de contrôle comprenant :

  ◦ un module de détection configuré pour détecter un défaut électrique de type court-circuit en fonction de l'intensité mesurée par le capteur de courant ;
  ◦ un module de commande d'interrupteur mécanique, configuré pour commander l'interrupteur mécanique dans la configuration ouverte lorsque qu'un défaut électrique de type court-circuit est détecté ; et
  ◦ un module de commande de cellule, configuré pour commander successivement chaque module de commutation dans la configuration bloquée, l'un des modules de commutation étant commandé de la configuration passante dans la configuration bloquée lorsqu'une tenue diélectrique de l'interrupteur mécanique est supérieure ou égale à une somme de la tension de limitation dudit module de commutation et des tensions de limitation des modules de commutation en configuration bloquée.

Selon l'invention, une entrée de l'interrupteur mécanique et une entrée de la cellule d'interruption sont connectées l'une à l'autre par une liaison électrique non interruptible et une sortie de l'interrupteur mécanique et une sortie de la cellule d'interruption sont connectées l'une à l'autre par une liaison électrique non interruptible.

Le fait que la liaison électrique soit non interruptible signifie que le dispositif ne comprend pas d'interrupteur auxiliaire. Ainsi, grâce à l'invention, le nombre de composants du dispositif électrique est réduit et les pertes électriques et thermiques sont minimisées, ce qui permet d'améliorer les performances du dispositif.

De plus, utiliser plusieurs modules de commutation permet de limiter le courant dès que la tenue diélectrique de l'interrupteur mécanique est supérieure ou égale à une somme de la tension de limitation dudit module de commutation, sans attendre que la tenue diélectrique soit égale à la somme de toutes les tensions de limitation. Ainsi, le courant est limité plus tôt, ce qui permet de limiter un accroissement du courant causé par le défaut électrique de type court-circuit, et donc de limiter les contraintes dans les charges ou même dans des câbles connectant le dispositif, la source et la charge.

Suivant d'autres aspects avantageux de l'invention, le dispositif comprend une ou plusieurs des caractéristiques suivantes, prises isolément ou suivant toutes les combinaisons techniquement possibles :

- Les modules de commutation sont connectés en série les uns aux autres.
- Chaque module de commutation comprend deux éléments semi-conducteurs qui sont unidirectionnels en courant et connectés l'un à l'autre en anti-série, et pour chaque élément semi-conducteur, une diode est connectée en anti-parallèle de l'élément semi-conducteur.

  - La cellule d'interruption comprend deux branches de redressement, l'entrée et la sortie de la cellule d'interruption formant respectivement un point milieu de l'une des branches de redressement, chaque branche de redressement comprenant deux diodes disposées de part et d'autre du point milieu, connectées en anti-série l'une par rapport à l'autre ;
  - les modules de commutation sont connectés en parallèle des branches de redressement ; et
  - chaque module de commutation comprend un seul élément semi-conducteur connecté en parallèle de l'élément de limitation de tension.

- Le dispositif comprend au moins trois modules de commutation.
- Le dispositif comprend en outre un sectionneur, connecté en série à l'interrupteur mécanique sans être connecté en parallèle de la cellule d'interruption.
- Une durée de déclenchement entre la détection du défaut électrique de type court-circuit par le module de détection et un passage de tous les modules de commutation dans la configuration bloquée est inférieure à 1ms, de préférence inférieure à 400 $\mu$s, de préférence encore inférieure à 200 $\mu$s.

L'invention concerne également une installation électrique comprenant une source, une charge connectée à la source, et un dispositif de protection électrique ainsi que décrit précédemment, connecté entre la source et la charge, une tension nominale du courant circulant entre la source et la charge étant inférieure à 1500 V.

L'invention concerne également un procédé de commande d'un dispositif de protection électrique, le procédé comprenant au moins les étapes suivantes :

- mesure de l'intensité du courant par le capteur de courant ;
- détection d'un défaut électrique de type court-circuit par l'unité de contrôle, en fonction de l'intensité mesurée par le capteur de courant ;
- lorsqu'un défaut électrique de type court-circuit est détecté, commande de l'interrupteur mécanique dans la configuration ouverte par le module de commande d'interrupteur mécanique ; et
- commande successive de chaque module de commutation dans la configuration bloquée, l'un des modules de commutation étant commandé de la configuration passante dans la configuration bloquée lorsqu'une tenue diélectrique de l'interrupteur mécanique est supérieure ou égale à une somme de la tension de limitation dudit module de commutation et des tensions de limitation des modules de commutation en configuration bloquée.

L'invention apparaîtra plus clairement à la lecture de la description qui va suivre, donnée uniquement à titre d'exemple non limitatif, et faite en référence aux dessins dans lesquels :

- [Fig. 1] la figure 1 est un schéma d'une installation électrique comprenant un dispositif de protection électrique conforme à un premier mode de réalisation de l'invention ;
- [Fig. 2] la figure 2 est un schéma d'une cellule d'interruption du dispositif de protection électrique selon le premier mode de réalisation de l'invention ;
- [Fig. 3] la figure 3 est une représentation graphique d'une tension et d'une intensité d'un courant circulant dans un dispositif de protection conforme à l'invention en fonction du temps ;
- [Fig. 4] la figure 4 est un logigramme d'un procédé de commande selon l'invention.
- [Fig. 5] la figure 5 est un schéma d'une cellule d'interruption d'un dispositif de protection électrique selon un deuxième mode de réalisation de l'invention ; et
- [Fig. 6] la figure 6 est un schéma d'une cellule d'interruption d'un dispositif de protection électrique selon un troisième mode de réalisation de l'invention.

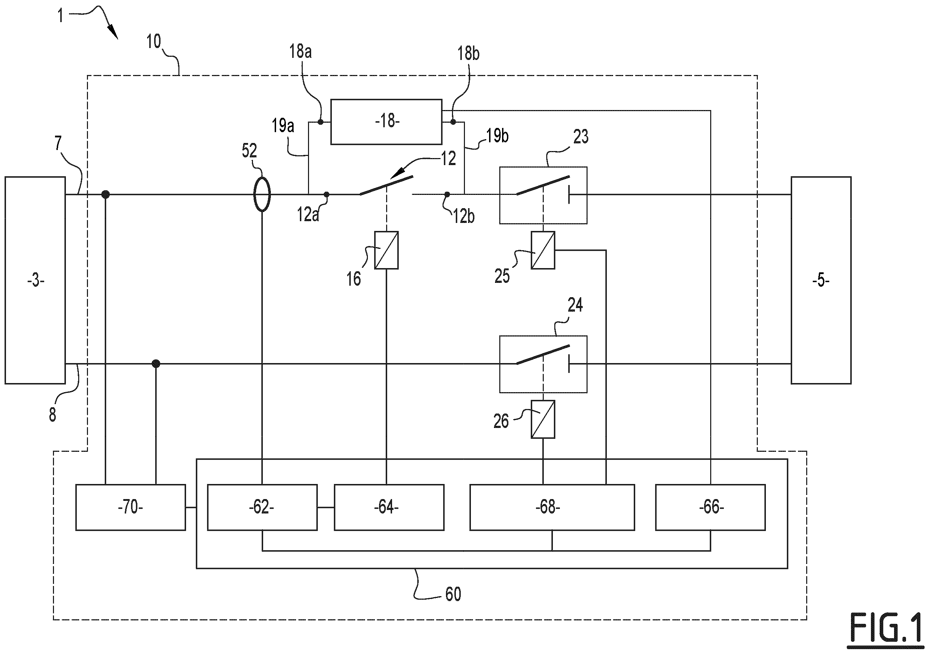

La figure 1 est un schéma d'une installation électrique 1 comprenant une source 3 et une charge 5, électriquement reliées entre elles par un conducteur de phase 7 et un conducteur de neutre 8. La source 3 fournit de l'électricité et est, par exemple, un générateur électrique ou un réseau électrique, par exemple un réseau électrique de secteur. La charge 5 est un appareil consommant de l'électricité, comme un appareil électrique domestique, un équipement industriel comme un moteur électrique, ou encore un serveur. Ainsi, un courant électrique, dit simplement courant par la suite, circule entre la source 3 et la charge 5 à travers le conducteur de phase 7, et revient à la source 3 par le conducteur de neutre 8.

Le courant est un courant basse tension, c'est-à-dire qu'une tension du courant est inférieure à 1500 V. Le courant est un courant alternatif ou, en variante, un courant continu.

L'installation électrique 1 comprend également un dispositif de protection électrique 10, également appelé dispositif par la suite, connecté entre la source 3 et la charge 5. Le dispositif 10 est configuré pour basculer entre une configuration armée, dans laquelle le dispositif 10 conduit le courant circulant entre la source 3 et la charge 5, et une configuration déclenchée, dans laquelle le dispositif 10 isole électriquement la source 3 de la charge 5.

Le dispositif 10 comprend un interrupteur mécanique 12, également connu sous le nom d'interrupteur de bypass, ou d'interrupteur mécanique rapide, également appelé FMS (de l'anglais *Fast Mechanical Switch)*. L'interrupteur mécanique 12 est connecté en série au conducteur de phase 7, par une entrée 12a et une sortie 12b, et est configuré pour basculer entre une configuration fermée, dans laquelle il conduit le courant circulant entre la source 3 et la charge 5, et une configuration ouverte, dans laquelle il ne conduit pas le courant. Dans la figure 1, l'interrupteur mécanique 12 est représenté en configuration ouverte. Le dispositif 10 comprend avantageusement un actionneur 16 qui, lorsqu'il est activé, bascule l'interrupteur mécanique 12 en configuration ouverte.

Le dispositif 10 comprend une cellule d'interruption 18, connectée en parallèle de l'interrupteur mécanique 12, de telle sorte que l'entrée 12a et la sortie 12b de l'interrupteur mécanique 12 sont connectées respectivement à une entrée 18a et à une sortie 18b de la cellule d'interruption 18. Plus spécifiquement, l'entrée 12a de l'interrupteur mécanique 12 et l'entrée 18a de la cellule d'interruption 18 sont connectées par la liaison électrique 19a, qui est non interruptible et la sortie 12b de l'interrupteur mécanique 12 est connectée à la sortie 18b de la cellule d'interruption 18 par la liaison électrique 19b, qui est également non interruptible. Autrement dit, les liaisons électriques 19a et 19b sont chacune un câble ou un fil électrique ; aucune des liaisons électriques 19a et 19b ne comprennent d'interrupteur ou plus généralement de moyen d'interruption du courant électrique. La cellule d'interruption 18 est configurée pour laisser passer ou pour interrompre le courant la traversant, ainsi qu'expliqué par la suite.

Le dispositif 10 comprend avantageusement un premier sectionneur 23 et, de manière optionnelle, un deuxième sectionneur 24, connectés respectivement au conducteur de phase 7 et au conducteur de neutre 8. En particulier, le sectionneur 23 est connecté au conducteur de phase 7 en série de l'interrupteur mécanique 12, sans être connecté en parallèle de la cellule d'interruption 18. En outre, le sectionneur 23 est connecté en série au conducteur de neutre 8. Les sectionneurs 23 et 24 sont configurés pour basculer entre une configuration fermée dans laquelle les sectionneurs 23 et 24 conduisent le courant, et une configuration ouverte, dans laquelle les sectionneurs 23 et 24 ne conduisent pas le courant. Avantageusement, et ainsi que représenté sur la figure 1, le dispositif 10 comprend un actionneur 25 du premier sectionneur 23 et un actionneur 26 du deuxième sectionneur 24 qui, lorsqu'ils sont activés, interagissent respectivement avec le premier sectionneur 23 et le deuxième sectionneur 24 pour les faire basculer en configuration ouverte. Les actionneurs 25 et 26 sont, par exemple, des bobines et sont activés lorsqu'un courant circule dans les spires des bobines.

Les sectionneurs 23 et 24 sont configurés pour basculer en position ouverte en particulier lorsqu'aucun courant ne circule entre la source 3 et la charge 5, autrement dit, lorsque le courant a été interrompu, par l'interrupteur mécanique 12 et/ou par la cellule d'interruption 18.

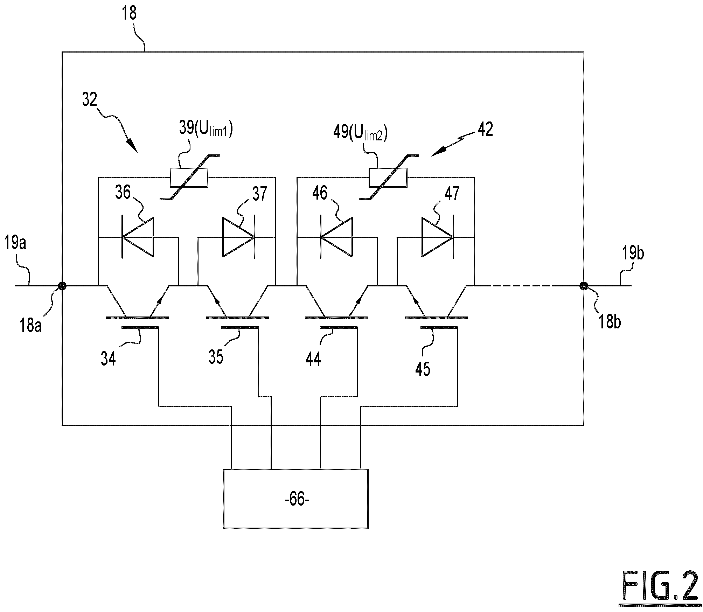

La cellule d'interruption 18 comprend une pluralité de modules de commutation, par exemple deux modules de commutation 32 et 42, ainsi que visible à la figure 2. En variante, les modules de commutation sont au nombre de trois ou plus, ainsi que symbolisé par la ligne en pointillés à la figure 2.

Les modules de commutation 32 et 42 sont connectés en série les uns aux autres. Chaque module de commutation 32 et 42 comprend au moins un élément semi-conducteur commandable en commutation, par exemple au moins un thyristor ou au moins un transistor, tels qu'un transistor à effet de champ, également appelé FET (de l'anglais *Field Effect Transistor),* un transistor à effet de champ à grille isolée, également appelé MOSFET (de l'anglais *Metal Oxide Semiconductor Field Effect Transistor),* un transistor bipolaire à grille isolée, ou IGBT (de l'anglais *Insulated Gate Bipolar Transistor),* ou une combinaison de ces différents éléments semi-conducteurs.

Dans l'exemple de la figure 2, chaque module de commutation 32 comprend deux transistors 34 et 35 unidirectionnels en courant, par exemple deux IGBT. Le sens de conduction des transistors 34 et 35 est indiqué par une flèche sur chaque transistor 34, 35. Les transistors 34 et 35 sont connectés l'un à l'autre en anti-série, c'est-à-dire que les transistors 34 et 35 sont connectés en série mais tête-bêche, de sorte à ne pas conduire le courant en même temps. Deux diodes 36 et 37 sont connectées respectivement aux transistors 34 et 35. La diode 36 est connectée en anti-parallèle du transistor 34, c'est-à-dire que la diode 36 et le transistor 34 ne conduisent pas le courant électrique en même temps : si le transistor 34 est passant, la diode 36 est bloquée et inversement. Autrement dit le transistor 34 et la diode 36 sont connectés en parallèle tête-bêche. Il en est de même pour le transistor 35 et la diode 37. Cette disposition permet à chaque module de commutation 32 et 42 de conduire du courant alternatif sans interruption à chaque changement de signe du courant.

Le module de commutation 32 comprend un élément de limitation de tension 39. L'élément de limitation de tension 39 est connecté en parallèle d'un ensemble formé par les transistors 34 et 35, et est par exemple une varistance à oxyde métallique, ou MOV (de l'anglais Metal Oxyde Varistor), une diode transil ou un éclateur à gaz. L'élément de limitation de tension 39 a une tension de limitation $U_{lim1}$, qui correspond à une tension à ses bornes lorsqu'il est traversé par le courant circulant entre la source 3 et la charge 5. On dit également que le module de commutation 32 a une tension de limitation $U_{lim1}$.

De même, le module de commutation 42 comprend deux transistors 44 et 45 et deux diodes 46 et 47, similaires au moins fonctionnellement et connectées de manière identique à ce qui a été décrit pour les transistors 34, 35 et les diodes 36 et 37. Le module de commutation 42 comprend un élément de limitation de tension 49, similaire au moins fonctionnellement à l'élément de limitation de tension 39 et connecté en parallèle des transistors 44 et 45. L'élément de limitation de tension 39 a une tension de limitation de tension $U_{lim2}$, ou autrement dit le module de commutation 42 a une tension de limitation $U_{lim2}$.

Les tensions de limitation $U_{lim1}$ et $U_{lim2}$ sont avantageusement différentes, par exemple la tension de limitation $U_{lim1}$ est égale à 520V et la tension de limitation $U_{lim2}$ est égale à 600V. En variante, les tensions de limitation de tension $U_{lim1}$ et $U_{lim2}$ sont identiques.

Les modules de commutation 32 et 42 sont configurés pour basculer entre une configuration passante et une configuration bloquée. Dans la configuration passante, le courant circule dans le module de commutation 32 en circulant soit dans le transistor 34 et la diode 37, soit dans le transistor 35 et la diode 36 et circule dans le module de commutation 32 soit dans le transistor 44 et la diode 47, soit dans le transistor 45 et la diode 46. En particulier, lorsque le courant traversant le dispositif 10 est alternatif, le transistor 34, la diode 37, le transistor 44 et la diode 47 conduisent le courant dans un premier temps puis, lorsque le courant change de sens, le transistor 35, la diode 36, le transistor 45 et la diode 46 conduisent le courant. Plus généralement, dans la configuration passante, au moins l'un des transistors 34, 35 et au moins l'un des transistors 44, 45 conduisent le courant.

Dans la configuration bloquée, les transistors 34, 35, 44 et 45 ne conduisent pas le courant et, si du courant circule dans les modules de commutation 32 et 42, il circule à travers les éléments de limitation de tension 39 et 49. Ainsi, dans la configuration bloquée, la tension aux bornes des modules de commutation 32 et 42 est respectivement la tension de limitation $U_{lim1}$ et la tension de limitation $U_{lim2}$.

Le dispositif de contrôle 10 comprend également un capteur de courant 52. Le capteur de courant 52 est configuré pour mesurer une intensité I du courant circulant entre la source et la charge, et en particulier le courant circulant dans le conducteur de phase 7. Le capteur de courant 52 est, par exemple, un tore de Rogowski.

Le dispositif de contrôle 10 comprend une unité de contrôle 60, comprenant un module de détection 62, connecté au capteur de courant 52 et configuré pour détecter un défaut électrique de type court-circuit en fonction de l'intensité I, mesurée par le capteur de courant 52. Dans la suite, on emploiera le terme court-circuit pour désigner un défaut électrique de type court-circuit.

L'unité de contrôle 60 comprend également un module de commande d'interrupteur mécanique 64, un module de commande de cellule 66 et, avantageusement, un module de commande de sectionneurs 68, connectés au module de détection 62 et respectivement configurés pour commander l'interrupteur mécanique 12, la cellule d'interruption 18 et les sectionneurs 23 et 24.

Les modules de commande d'interrupteur mécanique 64 et de sectionneurs 68 sont avantageusement configurés pour actionner respectivement les actionneurs 16, 25 et 26, afin de basculer l'interrupteur 12 et les sectionneurs 23 et 24 en configuration ouverte.

L'unité de contrôle 60 est un circuit électronique conçu pour manipuler et/ou transformer des données représentées par des quantités électroniques ou physiques dans des registres de l'unité de contrôle 60 et/ou des mémoires, en d'autres données similaires correspondant à des données physiques dans les mémoires de registres ou d'autres types de dispositifs d'affichage, de dispositifs de transmission ou de dispositifs de mémorisation.

En tant qu'exemples spécifiques, l'unité de contrôle 60 est réalisée sous forme d'un composant logique programmable, tel qu'un FPGA (de l'anglais *Field Programmable Gate Array),* ou encore d'un circuit intégré, tel qu'un ASIC (de l'anglais *Application Specific Integrated Circuit).*

En variante non représentée, l'unité de contrôle 60 comprend une unité de traitement d'informations formée par exemple d'une mémoire et d'un processeur associé à la mémoire. Le module de détection 62, le module de commande d'interrupteur mécanique 64, le module de commande de cellule 66 et le module de commande de sectionneurs 68 sont réalisés chacun sous forme d'un logiciel, ou d'une brique logicielle, exécutable par le processeur. La mémoire de l'unité de contrôle 60 est alors apte à stocker un logiciel de détection, un logiciel de commande d'interrupteur mécanique, un logiciel de commande de cellule et un logiciel de commande de sectionneurs. Le processeur est alors apte à exécuter chacun des logiciels parmi le logiciel de détection, le logiciel de commande d'interrupteur mécanique, le logiciel de commande de cellule et le logiciel de commande de sectionneurs.

En variante non représentée, le module de détection 62, le module de commande d'interrupteur mécanique 64, le module de commande de cellule 66 et le module de commande de sectionneurs 68 sont réalisés chacun sous forme d'un composant logique programmable, tel qu'un FPGA (de l'anglais *Field Programmable Gate Array),* d'un circuit intégré, tel qu'un ASIC (de l'anglais *Application Specific Integrated Circuit),* ou encore sous la forme d'un composant analogique.

De manière avantageuse, le dispositif 10 comprend également un module d'alimentation 70, connecté aux conducteurs 7 et 8 et à l'unité de contrôle 60, afin d'alimenter en électricité l'unité de contrôle 60. En variante non représentée, le module d'alimentation 70 est connecté à un circuit externe, non relié aux conducteurs 7 et 8. En variante non représentée, le module d'alimentation 70 est alimenté par effet transformateur à partir du courant circulant dans les conducteurs 7 et 8.

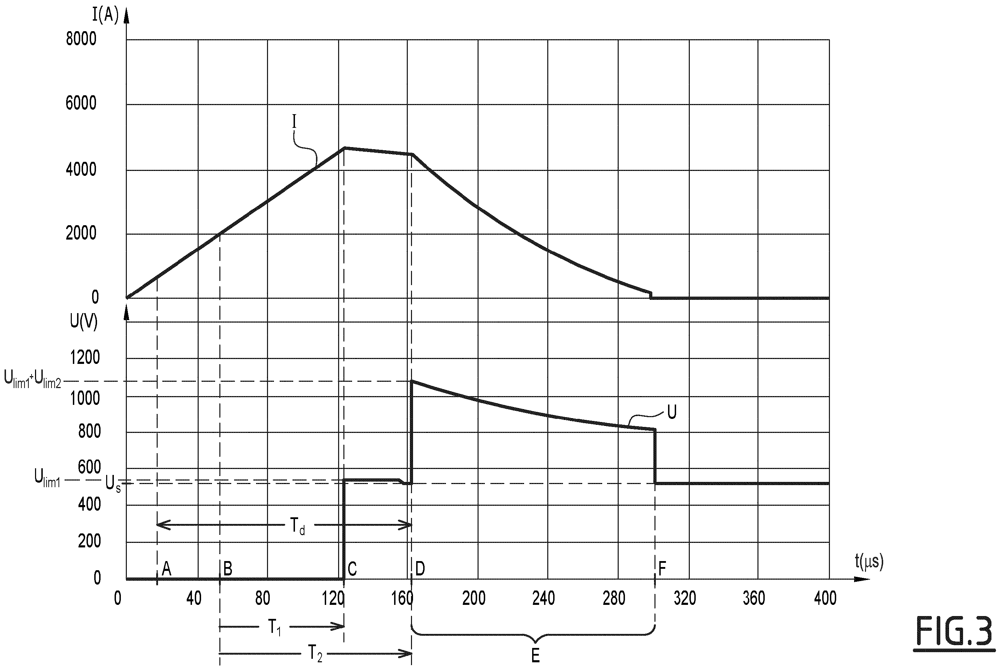

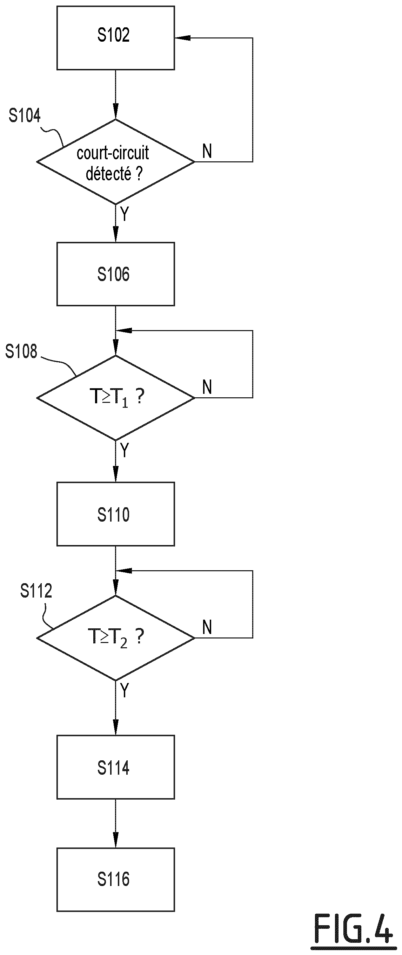

Un procédé de fonctionnement du dispositif 10 va maintenant être expliqué, en regard des figures 3 et 4.

Initialement, de manière avantageuse, le dispositif 10 est en configuration armée, c'est-à-dire que les sectionneurs 23 et 24 sont en configuration fermée, l'interrupteur mécanique 12 est en configuration fermée, et les transistors 34, 35, 44 et 45 sont passants. Toutefois, à cause d'une résistance interne inférieure à celle des transistors 34, 35, 44 et 45, l'interrupteur mécanique 12 conduit l'ensemble du courant électrique circulant dans le dispositif 10. Une tension U aux bornes du dispositif 10 est sensiblement nulle.

Le capteur de courant 52 mesure l'intensité I du courant circulant dans le conducteur de phase 7, à l'étape S102.

L'unité de contrôle 60 reçoit la mesure de l'intensité I et détecte, via le module de détection 62, si un court-circuit est présent entre la source 3 et la charge 5, à l'étape S104. Si un court-circuit n'est pas détecté, alors le capteur de courant 52 effectue à nouveau l'étape S102 et continue de mesurer l'intensité I du courant. Un fonctionnement itératif est alors mis en œuvre. Si un court-circuit est détecté, ce qui correspond à l'instant A de la figure 3, alors l'unité de contrôle 60 commande l'interrupteur mécanique 12 en basculement dans sa configuration ouverte, via le module de commande d'interrupteur mécanique 64, lors de l'étape S106. L'ouverture de l'interrupteur mécanique 12 correspond à l'instant B sur la figure 3.

Lorsqu'un court-circuit est présent entre la source 3 et la charge 5, ou dans la charge 5, l'intensité I augmente de manière importante et rapide, par exemple de plusieurs dizaines d'ampères par microseconde. Ainsi, le court-circuit est par exemple détecté lorsque l'intensité I est supérieure à un seuil prédéterminé, ou lorsqu'une dérivée de l'intensité I est supérieure à un seuil prédéterminé, ou encore lorsqu'une combinaison de conditions sur l'intensité I et sa dérivée sont remplies.

Lorsque l'interrupteur mécanique 12 est en configuration ouverte, le courant électrique est transféré de l'interrupteur mécanique 12 à la cellule d'interruption 18. Cependant, l'ouverture de l'interrupteur mécanique 12 génère un arc électrique et une ionisation du milieu entre des contacts de l'interrupteur mécanique 12. Cela diminue une tenue diélectrique de l'interrupteur mécanique 12. Ainsi, avant de réduire ou d'interrompre le courant circulant entre la source 3 et la charge 5, il est nécessaire d'attendre un rétablissement d'une tenue diélectrique de l'interrupteur mécanique 12 suffisante, faute de quoi un re-claquage peut survenir aux bornes de l'interrupteur mécanique 12, c'est-à-dire un réamorçage du courant au travers des contacts de l'interrupteur mécanique 12, alors que ce dernier est en configuration ouverte, et la réduction ou l'interruption du courant ne pourra pas être réalisée.

Une durée d'attente T est mesurée à partir du moment où l'interrupteur mécanique 12 bascule en configuration ouverte.

En variante non représentée, la durée d'attente T est mesurée à partir du moment où le court-circuit est détecté, autrement dit, à partir de l'instant A.

Lorsque la durée d'attente T devient supérieure ou égale à un premier seuil d'attente $T_1$, aussi appelé temps de Paschen, la tenue diélectrique de l'interrupteur mécanique 12 est suffisante pour qu'il supporte une tension à ses bornes égale à la tension de limitation $U_{lim1}$. Le premier seuil d'attente $T_1$ est avantageusement prédéterminé et programmé par le constructeur du dispositif 10 en fonction, par exemple, des caractéristiques de l'interrupteur mécanique 12 et de la tension de limitation $U_{lim1}$, ou est déterminé par l'unité de contrôle 60, par exemple en fonction de l'intensité I du courant au moment où l'interrupteur mécanique 12 bascule en configuration ouverte et de la tension de limitation $U_{lim1}$.

L'unité de contrôle 60 détermine si la durée d'attente T est supérieure ou égale au premier seuil d'attente $T_1$, à l'étape S108. Si ce n'est pas le cas, alors l'unité de contrôle 60 attend une durée prédéterminée puis effectue à nouveau l'étape S108. Si la durée d'attente T est supérieure ou égale au premier seuil d'attente $T_1$, alors le module de commande de cellule 66 commande le module de commutation 32 en configuration bloquée à l'étape S110, qui correspond à l'instant C sur la figure 3. Les transistors 36 et 37 sont bloqués et ne conduisent pas le courant, qui circule alors dans l'élément de limitation de tension 39 et dans le module de commutation 42. La tension U aux bornes du dispositif 10, et donc aux bornes de l'interrupteur mécanique 12 est alors égale à la tension de limitation $U_{lim1}$. Le passage du courant dans l'élément de limitation de tension 39 permet de limiter un accroissement de l'intensité I causé par le court-circuit, selon la formule suivante :

$$TA \cong 1 - \frac{U}{U_s}$$

Avec TA le taux de croissance de l'intensité I ;

U la tension aux bornes du dispositif 10 ; et
$U_s$ la tension nominale du courant, dite aussi tension du secteur.

En pratique, les tensions induites par la résistance des conducteurs 7 et 8, et par le défaut sont considérées négligeables, et le taux d'accroissement TA est ainsi considéré égal à $1 - \frac{U}{U_s}$.

A la figure 3, la tension de limitation $U_{lim1}$ est

environ égale à la tension nominale du courant $U_s$, par exemple de l'ordre de 520V. Ainsi, lorsque le module de commutation 32 est commandé dans la configuration bloquée, la tension U aux bornes du dispositif 10 est de l'ordre de 520V et l'intensité I arrête de croître.

L'unité de contrôle 60 détermine également si la durée d'attente T est supérieure ou égale à un deuxième seuil d'attente $T_2$. Le deuxième seuil de durée $T_2$ est également mesuré à partir du moment où l'interrupteur mécanique 12 bascule en configuration ouverte et correspond au moment où la tenue diélectrique de l'interrupteur mécanique 12 est égale à la somme des tensions de limitation $U_{lim1}$ et $U_{lim2}$ des modules de commutation 32 et 42.

Ainsi, l'unité de contrôle 60 détermine si la durée d'attente T est supérieure ou égale au deuxième seuil d'attente $T_2$, à l'étape S112. Si la durée d'attente T est inférieure au deuxième seuil d'attente $T_2$ alors l'unité de contrôle 60 attend une durée prédéterminée puis effectue à nouveau l'étape S112. Un fonctionnement itératif est alors mis en oeuvre. Si la durée d'attente T est supérieure ou égale au deuxième seuil d'attente $T_2$, alors le module de commande de cellule 66 commande le module de commutation 42 en configuration bloquée à l'étape S114, qui correspond à l'instant D sur la figure 3.

Le deuxième seuil d'attente $T_2$ est avantageusement prédéterminé et programmé par le constructeur du dispositif 10, par exemple en fonction des caractéristiques de l'interrupteur mécanique 12 et de la tension de limitation $U_{lim2}$, ou est déterminé par l'unité de contrôle 60, par exemple en fonction de l'intensité I du courant au moment où l'interrupteur mécanique 12 bascule en configuration ouverte, et de la tension de limitation $U_{lim2}$.

Lors de l'étape S114, les transistors 44 et 45 sont bloqués, en plus des transistors 34 et 35. Le courant passe alors dans l'élément de limitation de tension 39 et dans l'élément de limitation 49. La tension U aux bornes du dispositif 10 est donc égale à la somme des tensions de limitation $U_{lim1}$ et $U_{lim2}$.

La tension aux bornes du dispositif 10 étant supérieure à la tension réseau, l'intensité I du courant circulant dans le dispositif 10 décroît jusqu'à devenir nulle, ainsi que visible dans la zone E à la figure 3. Lorsque l'intensité I devient nulle, le courant est interrompu entre la source 3 et la charge 5, et la tension aux bornes du dispositif 10 devient égale à la tension réseau $U_s$, ainsi que visible à l'instant F. De manière avantageuse, une durée de déclenchement $T_d$ entre le moment où le court-circuit est détecté et le moment où tous les modules de commutation ont basculé dans la configuration bloquée, c'est-à-dire une durée entre les instants A et D, est inférieure à 1ms, de préférence inférieure à 400μs, de préférence encore, inférieure à 200μs.

Avantageusement, lorsque l'intensité I est devenue nulle, le module de commande de sectionneur 68 active les actionneurs 25 et 26, afin de basculer les sectionneurs 23 et 24 en configuration ouverte à l'étape S116. Par exemple, dans le cas où les actionneurs 25 et 26 sont des bobines, le module de commande de sectionneur 68 envoie une impulsion électrique aux actionneurs 25 et 26. Cela génère un champ magnétique qui interagit avec les sectionneurs 23 et 24 et leur permet de basculer en configuration ouverte. Le dispositif 10 est alors en configuration déclenchée.

Les sectionneurs 23 et 24 basculent en configuration ouverte seulement une fois le courant interrompu et servent à isoler galvaniquement la source 3 et la charge 5, mais ne participent pas à l'interruption du courant en tant que telle.

De manière plus générale, dans le cas où le dispositif 10 comprend d'autres modules de commutation, chaque seuil d'attente est déterminé en fonction du module de commutation et de l'ordre dans lequel les modules de commutation basculent en configuration bloquée. En effet, un module de commutation donné est commandé en ouverture lorsque la durée d'attente T est supérieure ou égale au temps nécessaire pour que la tenue diélectrique devienne supérieure ou égale à la somme de la tension de limitation du module de commutation donné et des tensions de limitation des modules de commutation déjà en configuration bloquée.

Le processus est décrit dans le cas où le module de commutation 32 est commandé avant le module de commutation 42. En variante, c'est le module de commutation 42 qui est commandé avant le module de commutation 32. Dans ce cas, le premier seuil d'attente est calculé en fonction de la tenue diélectrique nécessaire pour tenir la tension de limitation $U_{lim2}$ sans claquage de l'interrupteur mécanique 12, autrement dit, en fonction de la tension de limitation $U_{lim2}$.

La commande successive des modules de commutation 32 et 42 permet ainsi de limiter le courant plus tôt, en l'occurrence dès que le premier seuil d'attente $T_1$ est atteint, plutôt que d'attendre que le deuxième seuil d'attente $T_2$ soit atteint avant d'interrompre le courant, et de laisser l'intensité I augmenter tant que le deuxième seuil d'attente $T_2$ n'est pas écoulée. Cela permet notamment de limiter l'augmentation de l'intensité I, d'éviter une surchauffe des conducteurs 7 et 8, et également de choisir des transistors 34, 35, 44 et 45 dont la tenue en courant est moins élevée que pour un dispositif équivalent sans modules de commutations commandés successivement dans la configuration bloquée.

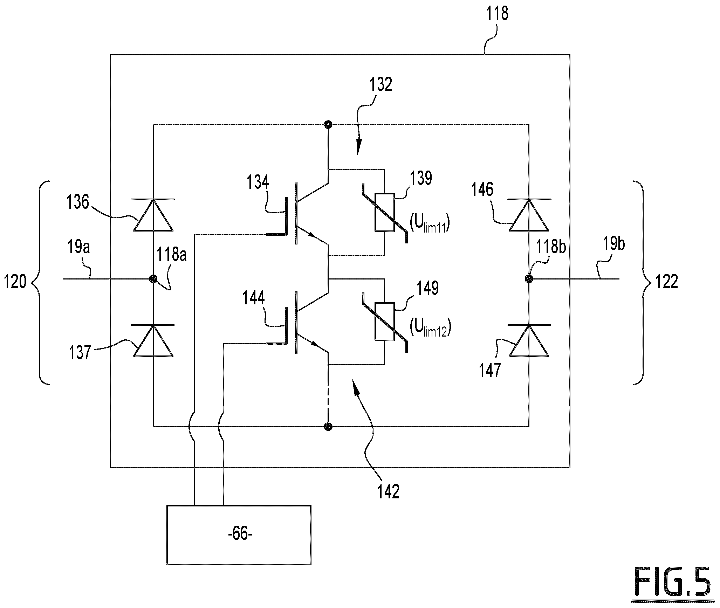

La figure 5 est un schéma d'une cellule d'interruption 118 d'un dispositif de protection électrique 10 conforme à un deuxième mode de réalisation de l'invention, en tant que variante à la cellule d'interruption 18. La cellule d'interruption 118 est, de manière similaire à la cellule d'interruption 18, connectée en parallèle de l'interrupteur mécanique 12, de telle sorte que l'entrée 12a et la sortie 12b de l'interrupteur mécanique 12 sont connectées respectivement à une entrée 118a et à une sortie 118b de la cellule d'interruption 118. Plus spécifiquement, l'entrée 12a de l'interrupteur mécanique 12 et l'entrée 118a de la cellule d'interruption 118 sont connectées par la liaison électrique 19a, non interruptible et la sortie 12b de l'interrupteur mécanique 12 est connectée à la sortie 118b de la cellule d'interruption 118 par la liaison électrique 19b également non interruptible. La cellule d'interruption 118 comprend deux branches de redressement 120 et 122. Chaque branche de redressement 120 et 122 comprend deux diodes, respectivement 136 et 137 pour la branche de redressement 120 et 146 et 147 pour la branche de redressement 122. Les diodes 136 et 137 sont connectées en anti-série l'une par rapport à l'autre, c'est-à-dire que les diodes 136 et 137 sont connectées en série et ne conduisent jamais le courant en même temps. Il en est de même pour les diodes 146 et 147.

L'entrée 118a et la sortie 118b de la cellule d'interruption 118 correspondent respectivement au point milieu de la branche de redressement 120, entre les diodes 136 et 137 et au point milieu de la branche de redressement 122, entre les diodes 146 et 147. Ainsi, la cellule d'interruption 118 est connectée en parallèle de l'interrupteur mécanique 12 par le point milieu de chaque branche de redressement 120 et 122.

La cellule d'interruption 118 comprend deux modules d'interruption 132 et 142, mais, en variante non représentée, comprend plus que deux modules d'interruption. Les modules d'interruption 132 et 142 sont connectés en parallèle des branches de redressement 120 et 122 et en série l'un à l'autre. En variante, la cellule d'interruption 118 comprend plus de deux modules d'interruption, connectés en série avec le module d'interruption 142 et en parallèle des branches 120 et 122.

Les modules d'interruption 132 et 142 comprennent respectivement un élément semi-conducteur commandable en commutation, qui sont ici un transistor 134 et 144, et un élément de limitation de tension 139 et 149. L'élément de limitation de tension 139 est connecté en parallèle du transistor 134 et l'élément de limitation de tension 149 est connecté en parallèle du transistor 144. Les transistors 134 et 144 sont dans l'exemple de la figure 5, des transistors unidirectionnels en courant, dont le sens est indiqué par une flèche sur chaque transistor. Les éléments de limitation de tension 139 et 149 sont similaires, au moins fonctionnellement, aux éléments de limitation de tension 39 et 49 et ont une tension de limitation $U_{lim11}$ et $U_{lim12}$ respectivement. La tension de limitation $U_{lim11}$ est avantageusement différente de la tension de limitation $U_{lim12}$, mais en variante ces tensions sont identiques.

La cellule d'interruption 118 est configurée pour s'affranchir du sens de circulation du courant grâce aux diodes 136, 137, 146 et 147, de telle sorte que les modules de commutation unidirectionnels 132 et 142 puissent être utilisés de façon bidirectionnelle. La disposition des diodes 136, 137, 146 et 147 permet de limiter le nombre de diodes dans la cellule d'interruption 118 à quatre. Ainsi, même lorsque la cellule d'interruption 118 comprend plus de deux modules de commutation, seules les quatre diodes 136, 137, 146 et 147 sont nécessaires à leur fonctionnement, limitant ainsi le nombre de diodes nécessaires par rapport à la cellule d'interruption 18.

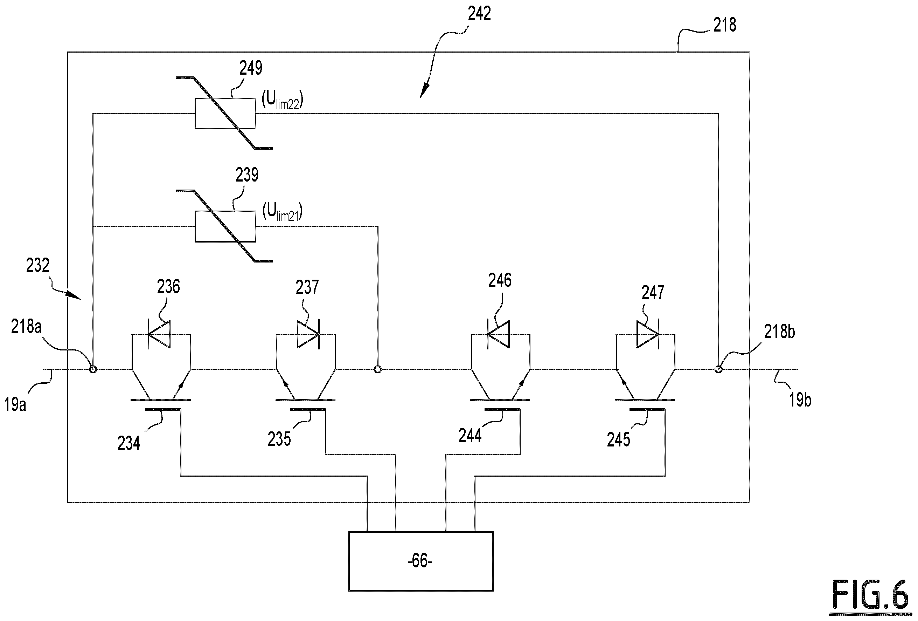

La figure 6 est un schéma électrique d'une cellule d'interruption 218 d'un dispositif de protection électrique 10 conforme à un troisième mode de réalisation de l'invention, en tant que mode de réalisation alternatif des cellules d'interruptions 18 et 118.

La cellule d'interruption 218 comprend une entrée 218a et une sortie 218b, et est connectée en parallèle de l'interrupteur mécanique 12, de telle sorte que l'entrée 12a et la sortie 12b de l'interrupteur mécanique 12 sont connectées respectivement à l'entrée 118a et la sortie 118b de la cellule d'interruption 118. Plus spécifiquement, l'entrée 12a de l'interrupteur mécanique 12 et l'entrée 218a de la cellule d'interruption 218 sont connectées par la liaison électrique 19a, non interruptible et la sortie 12b de l'interrupteur mécanique 12 est connectée à la sortie 118b de la cellule d'interruption 118 par la liaison électrique 19b.

La cellule d'interruption 218 comprend deux modules de commutation 232 et 242. Le module de commutation 232 est similaire au module de commutation 32, et comprend deux éléments semi-conducteurs, ici deux transistors 234, 235 connectés l'un à l'autre en anti-série, qui sont avantageusement unidirectionnels en courant, ainsi qu'indiqué par une flèche sur chaque transistor 234, 235. Le module de commutation 232 comprend une diode 236, connectée en anti-parallèle du transistor 234 et une diode 237 connectée en anti-parallèle du transistor 235. Le module de commutation 232 comprend un élément de limitation de tension 239, similaire au moins fonctionnellement à l'élément de limitation de tension 39, de tension de limitation $U_{lim21}$, et connecté en parallèle d'un ensemble formé par les transistors 234 et 235.

Le module de commutation 242 comprend également deux transistors 244 et 245, connectés en anti-série l'un à l'autre, qui sont avantageusement unidirectionnels en courant ainsi qu'indiqué par une flèche sur chaque transistor 244, 245. Une diode 246 est connectée en anti-parallèle du transistor 244 et une diode 247 est connectée en anti-parallèle du transistor 245. Le module de commutation 242 comprend un élément de limitation de tension 249, similaire au moins fonctionnellement à l'élément de limitation de tension 49, de tension de limitation $U_{lim22}$. La tension de limitation $U_{lim22}$ est avantageusement différente de la tension de limitation $U_{lim21}$, mais en variante les tensions de limitation $U_{lim21}$ et $U_{lim22}$ sont identiques.

Dans la configuration passante, lorsque le courant traversant le dispositif 10 est alternatif, le courant circule successivement dans le transistor 234, la diode 237, le transistor 244 et la diode 247 d'une part, puis lorsque le courant change de sens, dans le transistor 235, la diode 236, le transistor 245 et la diode 246 d'autre part.

A la différence de l'élément de limitation de tension 49, l'élément de limitation de tension 249 est connecté en parallèle d'un ensemble formé par les quatre transistors 234, 235, 244 et 245. Ainsi les modules des commutation 232 et 242 ne sont pas connectés en série l'un de l'autre.

Le procédé de fonctionnement décrit pour un dispositif 10 comprenant une cellule d'interruption 18 est également applicable à un dispositif 10 comprenant une cellule d'interruption 118 ou à un dispositif 10 comprenant une cellule d'interruption 218.

La cellule d'interruption 218 permet, lorsque le module de commutation 232 est le seul à être commandé dans la configuration bloquée, d'obtenir une tension aux bornes du dispositif 10 égale à la tension de limitation de l'élément limiteur de tension 239. Lorsque le module de commutation 242 est commandé dans la configuration bloquée, indépendamment de la commande du module de commutation 232, la tension aux bornes du dispositif 10 est égale à la tension de l'élément limiteur de tension 249. Ainsi les tensions de limitation aux bornes du dispositif 10 peuvent être $U_{lim21}$ ou $U_{lim22}$. En variante non représentée, la source 3 et la charge 5 sont reliées entre elles par un unique conducteur de phase, ou par plusieurs conducteurs de phase, par exemple trois. Dans ce cas, le dispositif 10 comprend avantageusement, pour chaque conducteur de phase, un interrupteur mécanique et une cellule d'interruption connectée en parallèle de l'interrupteur mécanique.

De manière optionnelle, un interrupteur mécanique est connecté au conducteur de neutre, une cellule d'interruption étant connectée en parallèle de l'interrupteur mécanique.

En variante non représentée, la source 3 et la charge 5 sont connectées entre elles uniquement par un, éventuellement plusieurs conducteurs de phase, et/ou l'installation électrique 1 ne comprend pas de conducteur de neutre 8.

## Revendications

1. Dispositif de protection électrique (10), configuré pour être connecté entre une source (3) et une charge (5), le dispositif (10) comprenant :

   - un interrupteur mécanique (12), configuré pour basculer entre une configuration fermée, dans laquelle l'interrupteur mécanique (12) conduit un courant circulant entre la source (3) et la charge (5), et une configuration ouverte, dans laquelle l'interrupteur mécanique (12) ne conduit pas le courant ;
   - une cellule d'interruption (18 ; 118 ; 218), connectée en parallèle de l'interrupteur mécanique (12), la cellule d'interruption (18 ; 118 ; 218) comprenant une pluralité de modules de commutation (32, 42 ; 132, 142 ; 232, 242), connectés les uns aux autres, chaque module de commutation (32, 42 ; 132, 142 ; 232, 242) comprenant :

     ○ au moins un élément semi-conducteur (34, 35, 44, 45 ; 134, 144 ; 234, 235, 244, 245) ; et
     ○ un élément de limitation de tension (39, 49 ; 139, 149 ; 239, 249), connecté en parallèle du ou de chaque élément semi-conducteur (34, 35, 44, 45 ; 134, 144 ; 234, 235, 244, 245),

   chaque module de commutation (32, 42 ; 132, 142 ; 232, 242) ayant une tension de limitation ($U_{lim1}$, $U_{lim2}$ ; $U_{lim11}$, $U_{lim12}$ ; $U_{lim21}$, $U_{lim22}$), chaque module de commutation (32, 42 ; 132, 142 ; 232, 242) étant configuré pour basculer entre une configuration passante, dans laquelle le courant circule dans le ou dans l'un des éléments semi-conducteurs (34, 35, 44, 45 ; 134, 144 ; 234, 235, 244, 245) du module de commutation (32, 42 ; 132, 142 ; 232, 242), et une configuration bloquée, dans laquelle si le courant circule dans le module de commutation (32, 42 ; 132, 142 ; 232, 242), il circule dans l'élément de limitation de tension (39, 49 ; 139, 149 ; 239, 249) ;
   - un capteur de courant (52) configuré pour mesurer une intensité (I) du courant ;
   - une unité de contrôle (60) comprenant :

     ○ un module de détection (62) configuré pour détecter un défaut électrique de type court-circuit en fonction de l'intensité (I) mesurée par le capteur de courant (52) ;
     ○ un module de commande d'interrupteur mécanique (64), configuré pour commander l'interrupteur mécanique (12) dans la configuration ouverte lorsque qu'un défaut électrique de type court-circuit est détecté ; et
     o un module de commande de cellule (66), configuré pour commander successivement chaque module de commutation (32, 42 ; 132, 142 ; 232, 242) dans la configuration bloquée, l'un des modules de commutation (32, 42 ; 132, 142 ; 232, 242) étant commandé de la configuration passante dans la configuration bloquée lorsqu'une tenue diélectrique de l'interrupteur mécanique (12) est supérieure ou égale à une somme de la tension de limitation ($U_{lim1}$, $U_{lim2}$ ; $U_{lim11}$, $U_{lim12}$ ; $U_{lim21}$, $U_{lim22}$) dudit module de commutation (32, 42 ; 132, 142 ; 232, 242) et des tensions de limitation ($U_{lim1}$, $U_{lim2}$ ; $U_{lim11}$, $U_{lim12}$ ; $U_{lim21}$, $U_{lim22}$) des modules de commutation (32, 42 ; 132, 142 ; 232, 242) en configuration bloquée,

   **caractérisé en ce qu'**une entrée (12a) de l'interrupteur mécanique (12) et une entrée (18a ; 118a ; 218a) de la cellule d'interruption (18 ; 118 ; 218) sont connectées l'une à l'autre par une liaison électrique (19a) non interruptible et une sortie (12b) de l'interrupteur mécanique (12) et une sortie (18b ; 118b ; 218b) de la cellule d'interruption (18 ; 118 ; 218) sont connectées l'une à l'autre par une liaison électrique (19b) non interruptible.

**2.** Dispositif (10) selon la revendication 1 dans lequel les modules de commutation (32, 42 ; 132, 142) sont connectés en série les uns aux autres.

**3.** Dispositif (10) selon la revendication 2 dans lequel chaque module de commutation (32, 42) comprend deux éléments semi-conducteurs (34, 35, 44, 45) qui sont unidirectionnels en courant et connectés l'un à l'autre en anti-série, et pour chaque élément semi-conducteur (34, 35, 44, 45), une diode (36, 37, 46, 47) est connectée en anti-parallèle de l'élément semi-conducteur (34, 35, 44, 45).

**4.** Dispositif (10) selon la revendication 2 dans lequel :

- la cellule d'interruption (118) comprend deux branches de redressement (120, 122), l'entrée (118a) et la sortie (118b) de la cellule d'interruption (118) formant respectivement un point milieu de l'une des branches de redressement (120, 122), chaque branche de redressement (120, 122) comprenant deux diodes (136, 137, 146, 147) disposées de part et d'autre du point milieu, connectées en anti-série l'une par rapport à l'autre ;
- les modules de commutation (132, 142) sont connectés en parallèle des branches de redressement (120, 122) ; et
- chaque module de commutation (132, 142) comprend un seul élément semi-conducteur (134, 144) connecté en parallèle de l'élément de limitation de tension (139, 149).

**5.** Dispositif (10) selon la revendication 4, comprenant au moins trois modules de commutation (132, 142).

**6.** Dispositif (10) selon l'une quelconque des revendications précédentes, comprenant en outre un sectionneur (23), connecté en série à l'interrupteur mécanique (12) sans être connecté en parallèle de la cellule d'interruption (18 ; 118 ; 218).

**7.** Dispositif (10) selon l'une quelconque des revendications précédentes, dans lequel une durée de déclenchement ($T_d$) entre la détection du défaut électrique de type court-circuit par le module de détection (62) et un passage de tous les modules de commutation (32, 42 ; 132, 142 ; 232, 242) dans la configuration bloquée est inférieure à 1ms, de préférence inférieure à 400 $\mu$s, de préférence encore inférieure à 200 $\mu$s.

**8.** Installation électrique (1) comprenant une source (3), une charge (5) connectée à la source (3), et un dispositif de protection électrique (10) selon l'une quelconque des revendications précédentes, connecté entre la source (3) et la charge (5), une tension nominale du courant circulant entre la source (3) et la charge (5) étant inférieure à 1500 V.

**9.** Procédé de commande d'un dispositif de protection électrique (10), le dispositif de protection électrique (10) étant selon l'une quelconque des revendications précédentes, le procédé comprenant au moins les étapes suivantes :

- mesure (S102) de l'intensité (I) du courant par le capteur de courant (52) ;
- détection (S104) d'un défaut électrique de type court-circuit par l'unité de contrôle (60), en fonction de l'intensité (I) mesurée par le capteur de courant (52) ;
- lorsqu'un défaut électrique de type court-circuit est détecté, commande (S106) de l'interrupteur mécanique (12) dans la configuration ouverte par le module de commande d'interrupteur mécanique (64) ; et
- commande (S110, S114) successive de chaque module de commutation (32, 34 ; 132, 134 ; 232, 234) dans la configuration bloquée, l'un des modules de commutation (32, 34 ; 132, 134 ; 232, 234) étant commandé de la configuration passante dans la configuration bloquée lorsqu'une tenue diélectrique de l'interrupteur mécanique (12) est supérieure ou égale à une somme de la tension de limitation ($U_{lim1}$, $U_{lim2}$ ; $U_{lim11}$, $U_{lim12}$ ; $U_{lim21}$, $U_{lim22}$) dudit module de commutation (32, 34 ; 132, 134 ; 232, 234) et des tensions de limitation ($U_{lim1}$, $U_{lim2}$ ; $U_{lim11}$, $U_{lim12}$ ; $U_{lim21}$, $U_{lim22}$) des modules de commutation (32, 34 ; 132, 134 ; 232, 234) en configuration bloquée.

FIG.1

FIG.2

EP 4 632 777 A1

FIG.3

S102

S104

court-circuit
détecté ?          N

Y

S106

S108

T≥T$_1$ ?          N

Y

S110

S112

T≥T$_2$ ?          N

Y

S114

S116

FIG.4

FIG.5

FIG.6

Europäisches Patentamt

European Patent Office

Office européen des brevets

**RAPPORT DE RECHERCHE EUROPEENNE**

Numéro de la demande

EP 25 16 9329

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 11 715 945 B2 (EATON INTELLIGENT POWER LTD [IE]) 1 août 2023 (2023-08-01) | 1-3,7-9 | INV. H01H9/54 |
| Y | * colonne 5, ligne 39 - colonne 13, ligne 38; figures 1-3 * | 4-6 | |
| | ----- | | |
| Y | US 2020/212666 A1 (MANAHAN JOSEPH MICHAEL [US] ET AL) 2 juillet 2020 (2020-07-02) | 4-6 | |
| A | * alinéas [0125] - [0127]; figures 15,17 * | 1,9 | |
| | ----- | | |
| A | DE 10 2022 111392 A1 (ETO MAGNETIC GMBH [DE]) 9 novembre 2023 (2023-11-09) * abrégé; figures * | 1,9 | |
| | ----- | | |

**DOMAINES TECHNIQUES RECHERCHES (IPC)**

H01H

Le présent rapport a été établi pour toutes les revendications

| Lieu de la recherche | Date d'achèvement de la recherche | Examinateur |
|---|---|---|
| Munich | 7 juillet 2025 | Findeli, Luc |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

............................................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 16 9329

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-07-2025

| Document brevet cité au rapport de recherche | Date de publication | Membre(s) de la famille de brevet(s) | Date de publication |
|---|---|---|---|
| US 11715945 B2 | 01-08-2023 | CN 116325052 A | 23-06-2023 |
| | | EP 4229665 A1 | 23-08-2023 |
| | | JP 7546158 B2 | 05-09-2024 |
| | | JP 2023545045 A | 26-10-2023 |
| | | KR 20230075516 A | 31-05-2023 |
| | | US 2022115859 A1 | 14-04-2022 |
| | | US 2023068787 A1 | 02-03-2023 |
| | | US 2023283060 A1 | 07-09-2023 |
| | | WO 2022078626 A1 | 21-04-2022 |
| US 2020212666 A1 | 02-07-2020 | AU 2019414432 A1 | 22-07-2021 |
| | | CA 3124942 A1 | 02-07-2020 |
| | | CN 113811972 A | 17-12-2021 |
| | | DO P2021000138 A | 15-10-2021 |
| | | EP 3903330 A1 | 03-11-2021 |
| | | KR 20210107795 A | 01-09-2021 |
| | | SG 11202106966P A | 29-07-2021 |
| | | US 2020212666 A1 | 02-07-2020 |
| | | US 2022200267 A1 | 23-06-2022 |
| | | WO 2020139922 A1 | 02-07-2020 |
| DE 102022111392 A1 | 09-11-2023 | CN 119156685 A | 17-12-2024 |
| | | DE 102022111392 A1 | 09-11-2023 |
| | | EP 4519900 A1 | 12-03-2025 |
| | | WO 2023213934 A1 | 09-11-2023 |

**EP 4 632 777 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 11715945 B2
- US 2022122801 A1